Europäisches Patentamt

European Patent Office

Office européen des brevets

(11) Veröffentlichungsnummer : **0 044 560**
**B1**

(12) **EUROPÄISCHE PATENTSCHRIFT**

(45) Veröffentlichungstag der Patentschrift :
**02.05.84**

(21) Anmeldenummer : **81105732.2**

(22) Anmeldetag : **21.07.81**

(51) Int. Cl.³ : **F 24 F 7/08**, F 24 F 7/04,
E 06 B 7/02, F 24 F 13/00

(54) Belüftungsanlage für im Zwangsumlauf belüftete Räume.

(30) Priorität : **22.07.80 DE 3027648**
**28.03.81 DE 3112394**

(43) Veröffentlichungstag der Anmeldung :
**27.01.82 Patentblatt 82/04**

(45) Bekanntmachung des Hinweises auf die Patenterteilung : **02.05.84 Patentblatt 84/18**

(84) Benannte Vertragsstaaten :
**AT CH FR GB LI NL SE**

(56) Entgegenhaltungen :
**CH-A- 310 453**
**DE-A- 2 441 687**
**DE-A- 2 519 658**
**DE-A- 2 608 557**
**DE-A- 2 630 667**
**DE-A- 2 720 991**
**DE-A- 2 806 574**
**FR-A- 2 318 300**
**FR-A- 2 405 439**
**GB-A- 1 222 555**
**US-A- 2 764 948**
**US-A- 4 040 477**
**Zeitschrift "Technik am Bau", Nr. 4/80, Seiten 311,**
**312 und 315**

(73) Patentinhaber : **Eltreva AG**
**Hauptstrasse 107**
**CH-4147 Aesch (CH)**

(72) Erfinder : **Schmidlin, Hans**
**Brüelweg 47**
**CH-4147 Aesch (CH)**

(74) Vertreter : **Gramm, Werner, Prof. Dipl.-Ing. et al**
**Patentanwälte Gramm + Lins Theo-**
**dor-Heuss-Strasse 2**
**D-3300 Braunschweig (DE)**

Belüftungsanlage für im Zwangsumlauf belüftete Räume

Die Erfindung betrifft eine Belüftungsanlage für im Zwangsumlauf belüftete Räume, die auf ihrer Wetteraußenseite eine Außen- und raumseitig eine Innenverglasung mit einem dazwischen gebildeten Luftkanal für abgesaugte Raumluft und ferner einen Frischluftkanal aufweisen mit einer wetterseitigen Frischluft-Ansaugöffnung und raumseitigen Frischluft-Austrittsöffnung, wobei der Luftkanal abströmseitig mit einem wetterseitigen Abluftaustritt sowie mit einem diesem vorgeschalteten Wärmetauscher in Verbindung steht, über den die Abluft Wärme an die den Frischluftkanal durchströmende Frischluft abgeben kann.

Eine derartige Konstruktion ist in der DE-Z. Technik am Bau, Nr. 4/80 (Seiten 311, 312 und 315) beschrieben. Hier ist die gesamte Luftregulierinrichtung einschließlich eines im Abluftkanal vorgesehenen Gebläses sowie des Wärmetauschers in ein Brüstungselement der Fassade integriert. Für Abluft und Frischluft ist jeweils ein bestimmter Zwangsweg vorgesehen ; eine Änderung der Strömungswege ist nicht möglich.

Nachteilig ist die konstruktionsbedingte Wärme/Kältebrücke zwischen Innen- und Außenraum. Nachteilig sind ferner die aufwendige Montage, die bereits beim Rohbau erfolgen muß, so daß sich die Gefahr von Beschädigungen ergibt, sowie die konstruktionsbedingte aufwendige Wartung der Einrichtung und der komplizierte Austausch von Aggregaten. Nachteilig ist schließlich die begrenzte Reguliermöglichkeit dieser Einrichtung.

Der DE-A-26 30 667 läßt sich ein Klima-Dachgerät entnehmen. Es handelt sich um ein Klimagerät für die Außenaufstellung insbesondere auf dem Dach von Fabrikhallen o. dgl. zum Abführen von Abluft und Zuführen von temperierter Zuluft. In einem gemeinsamen Gehäusekasten sind ein von der Abluft und der Zuluft durchströmbarer Wärmetauscher, ein Zuluft- und ein Abluftgebläse, ein Zuluft- und ein Abluftkanal sowie eine steuerbare Bypass-Klappe vorgesehen, über die die Abluifteintrittsseite des Wärmetauschers direkt mit dessen Abluftaustrittsseite verbindbar ist. Ferner ist eine steuerbare Umluftklappe vorgesehen, über die die Abluifteintrittsseite des Wärmetauschers direkt mit dessen Zuluftaustrittsseite verbindbar ist. Frischlufteintritt und Fortluftaustritt des Gehäusekastens sind absperrbar ausgebildet.

Diese Konstruktion eignet sich ausschließlich für die Klimatisierung von Großräumen wie z. B. Produktionshallen, Lagerhallen o. dgl. ; eine individuelle Klimatisierung einzelner Räume eines Gebäudes ist ausgeschlossen. Nachteilig ist ferner, daß die Abluft nicht durch einen zwischen einer Außen- und Innenverglasung gebildeten Luftkanal abgesaugt wird, wie es bei der eingangs erläuterten vorbekannten Energiefassade vorgesehen ist. Hinsichtlich der einem solchen Abluftfenster zukommenden Vorteile wird auf die vorstehend genannte Vorveröffentlichung verwiesen.

Der Erfindung liegt die Aufgabe zugrunde, die eingangs erläuterte Belüftungsanlage so zu verbessern, daß sie sich einfacher montieren und besser warten läßt, und daß Wärme- bzw. Kältebrücken zwischen Innen- und Außenraum vermieden werden.

Diese Aufgabe wird gemäß der Erfindung gelöst durch eine Luftregulierungseinrichtung, die eine kompakte Baueinheit bildet, die ausschließlich raumseitig des jeweils zu belüftenden Raumes angeordnet und unmittelbar an die den Luftkanal bildende Fensterkonstruktion angeschlossen ist, wobei die kompakte Baueinheit zumindest eine separat ausgebildete Luftsteuerbox sowie eine ebenfalls separat ausgebildete Ventilatorbox umfaßt, die u. a. den Wärmetauscher enthält.

Die erfindungsgemäße Belüftungsanlage soll in mehrstöckigen Büro- oder Verwaltungsbauten, aber ebenso in großen Wohnblocks, z. B. insbesondere für Gemeinschaftsräume wie Sitzungs- oder Wohnzimmer u. dgl., nachträglich oder ergänzungsmäßig eingebaut werden. Dabei ist von Vorteil, daß für die Anordnung der Lüftungsaggregate kein Nebenraum erforderlich ist, der insbesondere beim Sanierungsbau in der Regel nicht vorhanden ist. Außerdem lassen sich lange Luftzu- und -abführkanäle vermeiden, die wirkungsmindernd sind und sich nur aufwendig und bei Bau-Sanierungen nachträglich kaum verlegen lassen.

Die DE-A-27 20 991 offenbart zwar ein Kompaktgerät, bei dem jedoch Zuluftdurchlaß und Abluftdurchlaß unmittelbar nebeneinander in derselben Ebene liegen, so daß sich dieses Kompaktgerät ausschließlich für eine zentrale Hausbelüftungsanlage eignet. Denn bei Verwendung dieses Gerätes für eine unabhängige Einzelbelüftung eines einzelnen Raumes würde zwischen den beiden genannten Öffnungen sofort ein « Kurzschluß » eintreten, die eingeblasene Zuluft würde also wieder über den Abluftstutzen abgesaugt werden. Da die beiden genannten Öffnungen außerdem in derselben Ebene liegen, ließe sich in dem zu belüftenden Raum keine den ganzen Raum bestreichende gleichmäßige Luftumwälzung erzielen.

Kompakte, separate Baueinheiten, die praktisch beliebig aufstellbar bzw. montierbar sind, sind zwar in der Klimatechnik allgemein üblich. Das obiger Erfindung zugrundeliegende Problem ergibt sich jedoch erst daraus, daß der zwischen der Außen- und Innenverglasung gebildete Luftkanal einen integralen Bestandteil der beanspruchten Belüftungsanlage bildet, so daß allein aus diesem Grunde die Belüftungsanlage nicht beliebig aufstellbar bzw. montierbar sein kann. Dieser Luftkanal ist vielmehr ein integraler Bestandteil des Gebäudes, so daß bekannte Belüftungsanlagen der in Rede stehenden Art daher auch schon bereits bei der Konzipierung dieses Gebäudes berücksichtigt werden mußten (siehe z. B. DE-A-26 24 792 oder DE-A-26 30 667).

Die neue Belüftungsanlage wird ästhetischen Bedürfnissen von Wohn- und Büroräumen gerecht und läßt sich unter Berücksichtigung maximaler Raumausnutzung z. B. über bestehende oder neu zu montierende Heizungsradiatoren montieren, ohne dabei die für die Radiatoren benötigte Einbautiefe wesentlich überschreiten zu müssen.

Dabei ist es vorteilhaft, wenn die Luftsteuerbox zumindest eine an das abströmseitige Ende des zwischen der Verglasung gebildeten Luftkanals anschließbare Abluft-Eintrittsöffnung, eine an die Frischluft-Ansaugöffnung anschließbare Frischluft-Eintrittsöffnung, eine an den wetterseitigen Abluftaustritt anschließbare Abluft-Austrittsöffnung sowie zumindest zwei an die Ventilatorbox anschließbare Luftdurchlaßöffnungen für Frischluft und Abluft aufweist, während die neben den Wärmetauscher zumindest einen Ventilator umfassende Ventilatorbox zumindest zwei an die Luftsteuerbox anschließbare Luftdurchlaßöffnungen für Frisch- und Abluft sowie die raumseitige Frischluft-Austrittsöffnung aufweist.

Es kann auch zweckmäßig sein, wenn die kompakte Baueinheit zusätzlich noch ein Luftsammelrohr umfaßt, das das abströmseitige Ende des Luftkanals mit der bzw. den Abluft-Eintrittsöffnungen der Luftsteuerbox verbindet. Dieses Luftsammelrohr kann in verschiedenen Tiefen vorgesehen werden, um so unterschiedliche Abstände zwischen Fensterrahmen und Luftreguliereinrichtung zu kompensieren. Das Luftsammelrohr wird üblicherweise zunächst mit dem Fensterrahmen verbunden. Die bereits miteinander verbundenen Luftsteuerbox und Ventilatorbox können dann in einer zweiten Phase der Montage mit dem Luftsammelrohr verbunden werden, um insbesondere Beschädigungen im Rohrbau zu vermeiden.

Um unterschiedlichen baulichen Gegebenheiten, bedingt beispielsweise durch Radiatoren, Innenausbauten, Vorhänge, limitierte Fensterbanktiefen u. dgl. einfacher Rechnung tragen zu können, ist es vorteilhaft, die Einbautiefe der Luftreguliereinrichtung variabel zu gestalten. Dies läßt sich erfindungsgemäß dadurch erreichen, daß Luftsteuerbox und Ventilatorbox über ein Verbindungsrohr zur Kopplung der genannten Luftdurchlaßöffnungen miteinander verbunden sind. Die verschiedenen Luftführungsbereiche sind in dem Verbindungsrohr durch entsprechend angeordnete Abschottungen gewährleistet.

Um die erfindungsgemäße Einrichtung den verschiedenen Bedürfnissen während eines gesamten Jahres in einfacher und energiesparender Weise anpassen zu können, sind verschiedene Schaltungen der einzelnen Luftwege möglich. Bevorzugte Ausführungsbeispiele sind Gegenstand der Ansprüche 5 bis 9. Bei allen Alternativlösungen kann durch Schließung des Bypasses die in der Abluft enthaltene Wärmeenergie genutzt werden.

Die Verschließorgane sind vorzugsweise durch Drehschieber gebildet, wobei die aus Rohrabschnitten bestehenden Drehschieber gleichachsig angeordnet und stirnseitig jeweils durch Trennwandungen gegeneinander abgeschottet sein können.

Derartige Drehschieber sind beispielsweise durch die DE-A-29 23 734 bekanntgeworden. Die dort offenbarte Lüftungsvorrichtung muß unmittelbar in einen Fenster- oder Türrahmen eingebaut werden und weist somit die bereits obengenannten Nachteile auf.

Das Gehäuse der Ventilatorbox kann aus einem halbharten Kunststoffschaum bestehen, der hervorragende Wärmeisoliereigenschaften aufweist. Dies ist vorteilhaft für die Schallisolierung gegenüber der Wetteraußenseite sowie hinsichtlich der in der Ventilatorbox vorgesehenen Gebläse.

In der Zeichnung sind einige als Beispiele dienende Ausführungsformen der Erfindung dargestellt. Es zeigen :

Figur 1 in schematischer Darstellung einen Vertikalschnitt durch einen zu belüftenden Raum mit Verglasung und einer Einrichtung zur Luftregulierung ;

Figur 2 in vergrößertem Maßstab einen Schnitt gemäß der Linie A-A in Figur 1 durch die Luftreguliereinrichtung (Alternative 1) ;

Figur 3 eine abgewandelte Ausführungsform (Alternative 2) in einer Darstellung gemäß Figur 2 ;

Figur 4 eine erneut abgewandelte Ausführungsform (Alternative 3) in einer Darstellung gemäß Figur 2 ;

Figur 5 fünf verschiedene Anordnungen der neuen Luftreguliereinrichtung und

Figur 6 verschiedene Schaltstellungen der Luftreguliereinrichtung gemäß Figur 4.

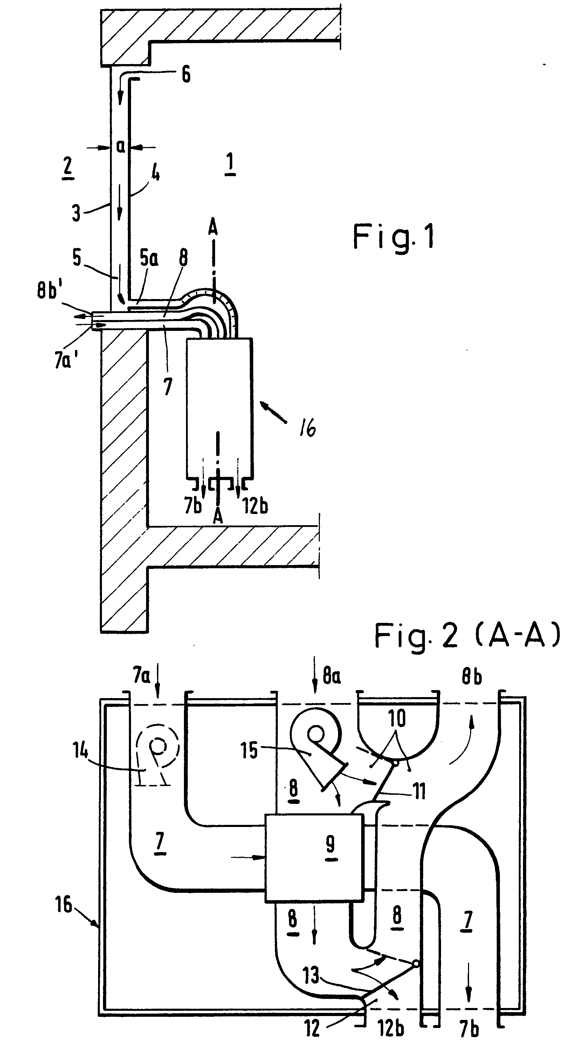

Gemäß den Figuren 1 und 2 weist ein zu belüftender Raum 1 auf seiner Wetteraußenseite 2 eine Außenverglasung 3 und raumseitig eine Innenverglasung 4 auf. Außen- und Innenverglasung bilden zwischen sich einen Luftkanal 5. Dabei ist der Abstand a zwischen Außen- und Innenverglasung nur so groß gewählt, daß die aus dem Raum 1 oben in den Luftkanal 5 einströmende Raumluft 6 im Luftkanal 5 eine definierte, weitgehend laminare Luftströmung bildet.

Zur Belüftung des Raumes 1 sind ein Frischluftkanal 7 sowie ein Abluftkanal 8 vorgesehen. Letzterer weist raumseitig eine Abluft-Eintrittsöffnung 8a und an der Wetteraußenseite 2 einen Abluftaustritt 8b' auf. Der Frischluftkanal 7 weist an der Wetteraußenseite 2 eine Frischluft-Ansaugöffnung 7a' und raumseitig eine Frischluft-Austrittsöffnung 7b auf. Die Medien der beiden genannten Kanäle 7, 8 stehen über einen gemeinsam durchströmten Wärmetauscher 9 in wärmeübertragender Verbindung.

Der durch die Verglasung 3, 4 gebildete Luftkanal 5 ist mit seinem abströmseitigen Ende 5a an die Abluft-Eintrittsöffnung 8a angeschlossen. Ferner ist an den Abluftkanal 8 in Strömungsrichtung gesehen vor dem Wärmetauscher 9 ein Bypass 10 angeschlossen, der über ein erstes steuerbares Verschließorgan 11 ganz oder teilweise absperrbar ist und unmittelbar zu dem wetterseitig liegenden Abluftaustritt 8b' führt. Ferner ist an den Abluftkanal 8 in Strömungsrichtung gesehen hinter dem Wärmetauscher 9 ein Umluftkanal 12 angeschlossen, der über eine Umluft-Austrittsöffnung 12b raumseitig mündet. Im Anschlußbereich des Umluftkanals 12 am Abluftkanal 8 ist ein zweites steuerbares Verschließorgan 13 vorgesehen, durch das der Abluftkanal 8 oder der Umluftkanal 12 ganz oder teilweise absperrbar sind.

Der Durchströmwiderstand des Wärmetauschers 9 ist für die Abluft größer als der des Bypass 10, wenn das erste verschließorgan 11 vollständig geöffnet ist.

Im Frischluftkanal 7 ist in Strömungsrichtung gesehen vor dem Wärmetauscher 9 ein Ansauggebläse 14 angeordnet, das nur bei bestimmten Druckverhältnissen unbedingt erforderlich und daher nur gestrichelt dargestellt wurde. Im Abluftkanal 8 ist in Strömungsrichtung gesehen vor dem Bypass 10 ein Ansauggebläse 15 angeordnet.

Figur 2 läßt erkennen, daß — mit Ausnahme des Luftkanals 5 — alle Kanäle und Aggregate in einer kompakten Baueinheit 16 zusammengefaßt sind, die unterhalb der Verglasung 3, 4 angeordnet ist und die verschiedenen Luftein- und -austrittsöffnungen aufweist.

Die Wirkungsweise und die vielseitigen Anpassungsmöglichkeiten der neuen Einrichtung gemäß Figur 2 werden nachfolgend für bestimmte Betriebszustände erläutert :

a) Winterbetrieb (Raum 1 ist nicht bewohnt ; Frischluftversorgung ist daher nicht notwendig)

Die warme Raumluft 6 wird von dem Gebläse 15 durch den Luftkanal 5 hindurch angesaugt. Durch das erste Verschließorgan 11 ist der Bypass 10 vollständig verschlossen (ausgezogene Position in Figur 2), während durch das zweite Verschließorgan 13 die Abluft-Austrittsöffnung 8b vollständig verschlossen ist (gestrichelte Darstellung in Figur 2). Daher fließt die Raumluft 6 durch den Abluftkanal 8, den Wärmetauscher 9 und den Umluftkanal 12 durch die Umluft-Austrittsöffnung 12b wieder in den Raum 1 zurück. Ist im Frischluftkanal 7 kein Ansauggebläse vorgesehen bzw. wird ein vorgesehenes Gebläse nicht eingeschaltet, erfolgt keine Ansaugung von Frischluft, da an der Frischluftkanal-Ansaugöffnung 7a' kein Unterdruck herrscht.

Ist Sonnenbestrahlung vorhanden, gibt die Außenverglasung 3 die durch die Sonnenbestrahlung aufgenommene Wärmeenergie an die durch den Luftkanal 5 strömende Raumluft 6 ab die entsprechend aufgewärmt wird. Dadurch kann die üblicherweise vorgesehene Heizanlage entlastet werden.

Ist keine Sonneneinstrahlung vorhanden, wird aufgrund der im Luftkanal 5 gebildeten laminaren Luftströmung im Festerbereich der K-Wert, also die Isolation erheblich verbessert.

b) Winterbetrieb (Außentemperatur niedriger als + 5 °C, bewohnter Raum)

Die Ansaugung der Raumluft 6 erfolgt wie vorstehend unter Ziffer a) erläutert. Das erste Verschließorgan 11 riegelt den Bypass 10 vollständig ab (ausgezogene Position in Figur 2), während das zweite Verschließorgan 13 den Umluftkanal 12 vollständig abschließt (ausgezogene Position in Figur 2). Die angesaugte Raumluft durchströmt daher den Abluftkanal 8 und den Wärmetauscher 9 und wird über die Abluft-Austrittsöffnung 8b bzw. 8b' zur Wetteraußenseite abgeblasen. Durch das Absaugen der Raumluft 6 entsteht in dem zu belüftenden Raum 1 ein Unterdruck, der in der Regel ausreicht, Frischluft über die Frischluft-Ansaugöffnung 7a' von der Wetteraußenseite anzusaugen. Für den Fall, daß Türen des Raumes 1 häufiger geöffnet werden oder aber nicht dicht genug abschließen, empfiehlt sich der Einbau eines Ansauggebläses 14 im Frischluftkanal 7, um so eine zwangsmäßige Frischluftversorgung sicherzustellen.

Die angesaugte Frischluft strömt durch den Wärmetauscher 9 wo sie die von der Abluft abgegebene Wärme übernimmt, und dann über die Frischluft-Austrittsöffnung 7b in den Raum 1. Dabei wäre es grundsätzlich möglich, die hier austretende Frischluft mittels beispielsweise elektrischen Heizelementen zusätzlich aufzuwärmen.

Als Vorteil dieser Disposition ergibt sich die Abführung der verbrauchten Raumluft nach Wärmeentzug sowie die Zufuhr aufgewärmter Frischluft.

c) Winter-/Sommer-Betrieb

Durch Sonneneinstrahlung kann die in der Verglasung aufgenommene Energie zu überhöhten Raumtemperaturen führen. Wird das in Figur 2 in vollständiger Verschließstellung dargestellte erste Verschließorgan 11 nur etwas geöffnet, kann ein Teil der aus dem Luftkanal 5 angesaugten Raumluft 6 ohne Wärmeentzug direkt über die Abluft-Austrittsöffnung 8b zur Wetteraußenseite strömen. Es wird dann also nur ein Teil der angesaugten Raumluft 6 über den Wärmetauscher 9 geleitet und strömt von dort über die Abluft-Austrittsöffnung 8b ins Freie.

Man erhält so eine regulierbare Energierückgewinnung.

d) Sommer-Betrieb (keine Wärmerückgewinnung)

Durch vollständige Öffnung des ersten Verschließorganes 11 (gestrichelte Darstellung in Figur 2) wird die angesaugte Raumluft 6, die im Luftkanal 5 stark aufgeheizt worden ist, direkt, also unter Umgehung des Wärmetauschers 9, zur Wetteraußenseite abgeführt. Der Luftdurchgangswiderstand im Wärmetauscher 9 beträgt ca.

3 bis 5 mm Wassersäule, so daß bei vollständig geöffnetem ersten Verschließorgan 11 praktisch keine Raumluft durch den Wärmetauscher 9 strömt. Durch diese Anordnung wird die Behaglichkeit hinter der besonnten Verglasung erhöht. Außerdem kann bei der genannten Stellung des ersten Verschließorgans 11 die Lüftungseinrichtung nachts auch zur Auskühlung der Räume, insbesondere von Büros, verwendet werden.

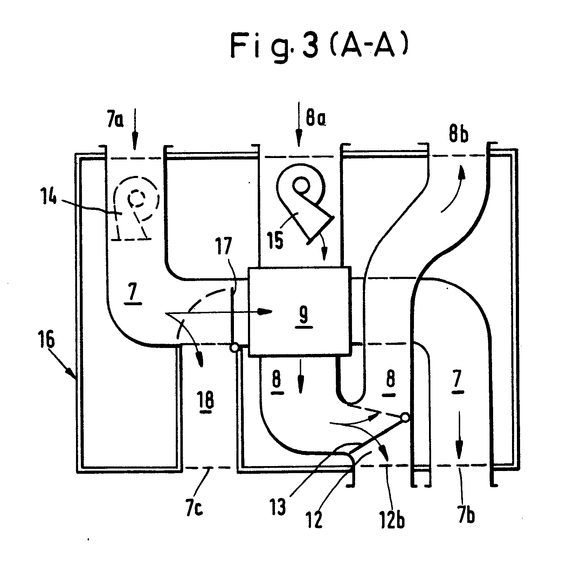

Figur 3 zeigt eine zweite erfinderische Lösung. Anstelle des gemäß Figur 2 im Abluftkanal vorgesehenen Bypass 10 ist hier im Frischluftkanal 7 in Strömungsrichtung gesehen vor dem Wärmetauscher 9 ein Bypass 18 angeordnet, der über eine zweite raumseitig liegende Frischluft-Austrittsöffnung 7c unmittelbar in den zu belüftenden Raum 1 mündet. Dieser Bypass 18 ist über ein erstes steuerbares Verschließorgan 17 regulierbar.

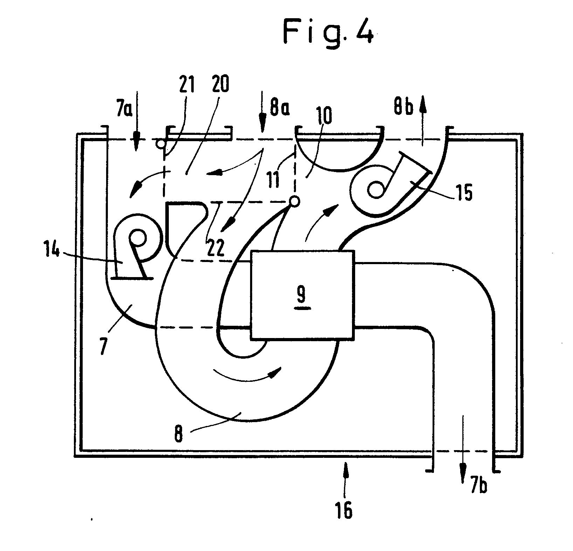

Bei der in Figur 4 dargestellten Alternative 3 ist an den Abluftkanal 8 in Strömungsrichtung gesehen vor dem Wärmetauscher 9 ein Mischkanal 20 angeschlossen, der in den Frischluftkanal 7 mündet. Dabei ist im Anschlußbereich des Mischkanals 20 am Frischluftkanal 7 ein zweites steuerbares Verschließorgan 21 vorgesehen, durch das der Mischkanal 20 oder der Frischluftkanal 7 ganz oder teilweise absperrbar sind. Im Abluftkanal 8 ist hinter dem Wärmetauscher 9 und hinter der Einmündung des Bypass 10 ein Gebläse 15 angeordnet. Im Frischluftkanal 7 ist hinter der Einmündung des Mischkanals 20 ein Gebläse 14 vorgesehen. Ferner kann im Abluftkanal 8 vor dem Wärmetauscher 9 ein drittes steuerbares Verschließorgan 22 vorgesehen werden, durch das der Abluftkanal absperrbar ist.

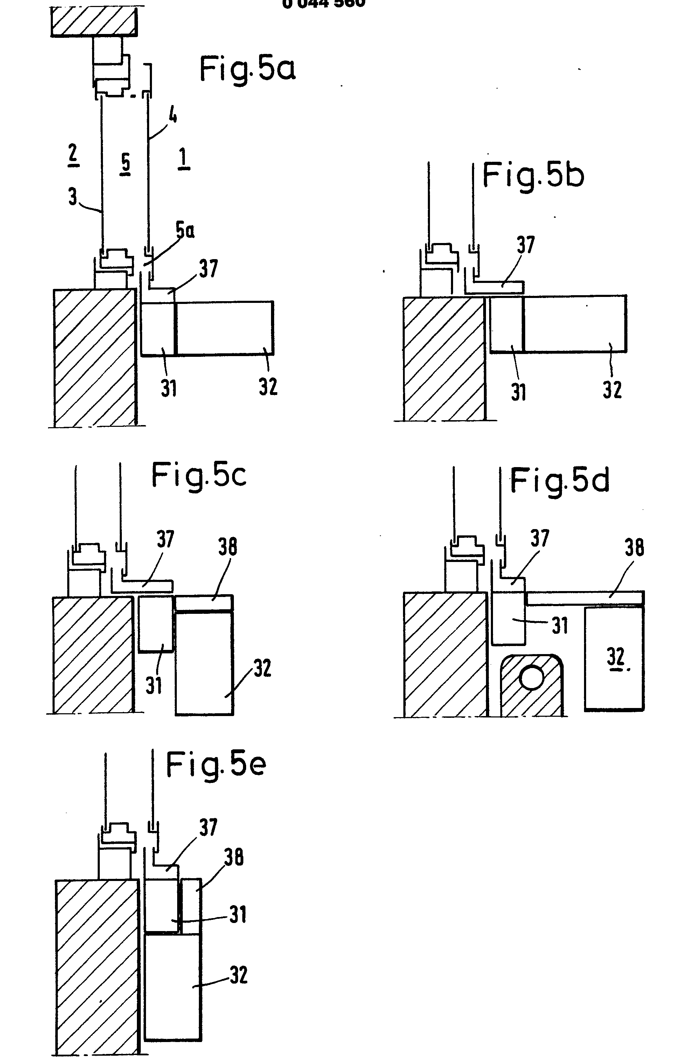

Figur 5 zeigt in schematischer Darstellung fünf verschiedene Anordnungen a bis e der neuen Luftreguliereinrichtung. Bei allen fünf Ausführungsformen umfaßt die Luftreguliereinheit zumindest eine separat ausgebildete Luftsteuerbox 31 sowie eine ebenfalls separat ausgebildete Ventilatorbox 32, die den Wärmetauscher 9 sowie die Gebläse bzw. Ventilatoren umfaßt. Die kompakte Baueinheit umfaßt zusätzlich noch ein Luftsammelrohr 37, das das abströmseitige Ende 5a des Luftkanals 5 mit der bzw. den Abluft-Eintrittsöffnungen 8a der Luftsteuerbox 31 verbindet. Dieses Luftsammelrohr 37 kann in verschiedenen Tiefen vorgesehen werden, um so unterschiedliche Abstände zwischen Fensterrahmen und Luftreguliereinrichtung zu kompensieren (Ausführungsformen a und b in Figur 5).

Um auch die Einbautiefe der Luftreguliereinrichtung variabel zu gestalten, können Luftsteuerbox 31 und Ventilatorbox 32 über ein Verbindungsrohr 38 miteinander verbunden werden (Ausführungsformen c bis e in Figur 5).

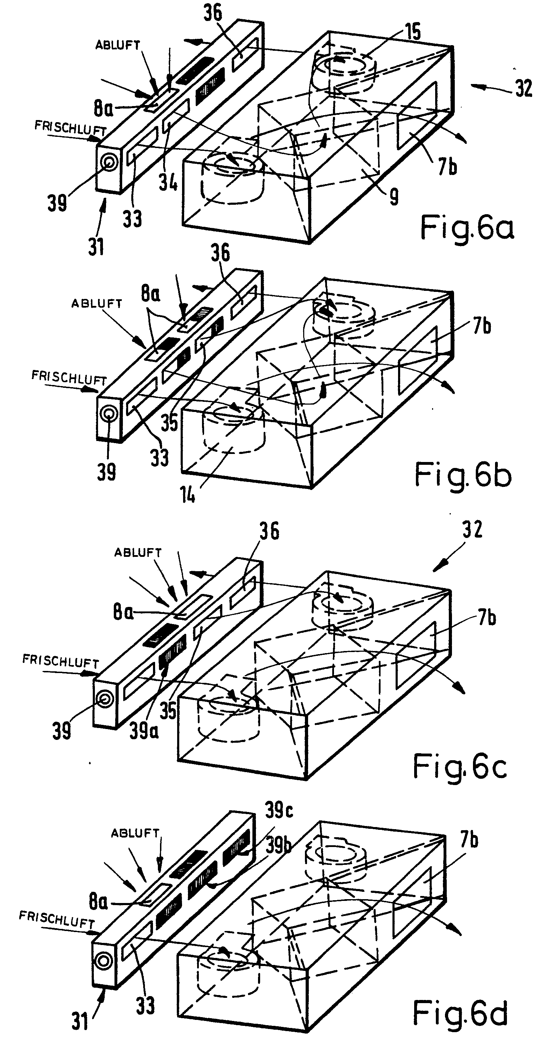

In Figur 6 sind vier verschiedene Schaltstellungen a bis d der Luftreguliereinrichtung gemäß Figur 4 dargestellt, wobei die Luftreguliereinrichtung aus einer Luftsteuerbox 31 und einer Ventilatorbox 32 besteht, die zur Veranschaulichung der Strömungsverhältnisse mit Abstand nebeneinander dargestellt sind. Tatsächlich sind die beiden genannten Bauteile unmittelbar oder aber über ein vorstehend näher erläutertes Verbindungsrohr 38 miteinander verbunden.

Die Luftsteuerbox 31 umschließt einen Drehschieber 39, von dem lediglich in der Stirnwandung der Luftsteuerbox die Drehachse dargestellt ist. Dieser Drehschieber 39 besteht aus mehreren, gleichachsig angeordneten Rohrabschnitten 39a, 39b, 39c (siehe Figur 6d), die stirnseitig jeweils durch Trennwandungen gegeneinander abgeschottet sind. Jedem dieser Rohrabschnitte ist jeweils eine Luftdurchlaßöffnung zugeordnet und zwar eine (33) für den Frischluftkanal 7, eine zweite (34) für den Zulauf des Abluftkanals 8 und den Mischkanal 20, eine dritte (35) für den Bypass 10 und eine vierte (36) für den Rücklauf des Abluftkanals 8.

Der der Luftdurchlaßöffnung 33 zugeordnete Rohrabschnitt ist bei allen vier dargestellten Betriebsstellungen offen, so daß die von der in dieser Figur nicht dargestellten Frischluft-Ansaugöffnung 7a' kommende und durch einen Pfeil angedeutete Frischluft auf der der Luftdurchlaßöffnung 33 gegenüberliegenden Seite der Luftsteuerbox 31 eintreten und durch die Luftdurchlaßöffnung 33 zu der Ventilatorbox 32 ausströmen kann.

In dem dargestellten Ausführungsbeispiel weist die Luftsteuerbox 31 außerdem mehrere Abluft-Eintrittsöffnungen 8a auf.

Die Ventilatorbox 32 umfaßt die Ventilatoren 14, 15, den Wärmetauscher 9 sowie die raumseitige Frischluft-Austrittsöffnung 7b.

Die in Figur 6 dargestellten vier Schaltungsbeispiele werden nachfolgend kurz erläutert:

a: Es handelt sich um eine normale Einstellung bei Winterbetrieb. Bypass 10 und Mischkanal 20 sind geschlossen. Die Frischluft durchströmt den Wärmetauscher 9, wird hier durch die Abluft erwärmt und strömt dann über die Frischluft-Austrittsöffnung 7b in den Innenraum, während die Abluft zur Abluft-Austrittsöffnung 8b zurückströmt (vgl. hierzu jeweils die schematische Darstellung in Figur 4).

b: Es handelt sich um eine Schaltung für Sommerbetrieb, bei dem der zu klimatisierende Innenraum zu warm ist. Der Bypass 10 ist halb geöffnet, so daß etwa die halbe Menge der Abluft unter Umgehung des Wärmetauschers 9 unmittelbar zur Abluft-Austrittsöffnung 8b strömt, während die Restmenge der Abluft durch den Wärmetauscher 9 geleitet wird und hier die Frischluft geringfügig erwärmt. Die in Figur 4 dargestellten Verschließorgane 11 und 22 befinden sich somit in halber Offenstellung.

c: Es handelt sich um Sommerbetrieb ohne Wärmerückgewinnung. Das Verschließorgan 11 und damit der Bypass 10 sind offen. Geschlossen sind das Verschließorgan 22 und damit der Abluftkanal 8 sowie das Verschließorgan 21 und damit der Mischkanal 20. Die gesamte Abluft wird somit unter Umgehung des Wärmetauschers 9 direkt zur Wetteraußenseite geführt. Die Frischluft gelangt somit ohne Aufheizung in den zu klimatisierenden Innenraum.

d: Dargestellt ist eine Schaltung für Umluftbetrieb. Das Verschließorgan 22 ist geschlossen, während das Verschließorgan 21 und damit der Mischkanal 20 geöffnet sind. Der Bypass 10 ist über das Verschließorgan 11 geschlossen. Die Frischluft-Eintrittsöffnung 7a ist geschlossen, so daß keine Frischluft angesaugt werden kann. Statt dessen wird die gesamte Abluft über den Mischkanal 20 und die Durchflußöffnung 33 in den Frischluftkanal 7 eingespeist, durchströmt (ohne jede Wirkung) den Wärmetauscher 9 und gelangt über die « Frischluft-Austrittsöffnung » 7b in den Innenraum. Im Umluftbetrieb wird also der sonst der Frischluft zugeordnete Strömungsweg von der Abluft durchströmt.

**Ansprüche**

1. Belüftungsanlage für im Zwangsumlauf belüftete Räume (1), die auf ihrer Wetteraußenseite (2) eine Außen- und raumseitig eine Innenverglasung (3, 4) mit einem dazwischen gebildeten Luftkanal (5) für abgesaugte Raumluft (6) und ferner einen Frischluftkanal (7) aufweisen mit einer wetterseitigen Frischluft-Ansaugöffnung (7a') und raumseitigen Frischluft-Austrittsöffnung (7b), wobei der Luftkanal (5) abströmseitig mit einem wetterseitigen Abluftaustritt (8b') sowie mit einem diesem vorgeschalteten Wärmetauscher (9) in Verbindung steht, über den die Abluft Wärme an die den Frischluftkanal (7) durchströmende Frischluft abgeben kann, gekennzeichnet durch eine Luftregulierungseinrichtung, die eine kompakte Baueinheit (16) bildet, die ausschließlich raumseitig des jeweils zu belüftenden Raumes (1) angeordnet und unmittelbar an die den Luftkanal (5) bildende Fensterkonstruktion (3, 4) angeschlossen ist, wobei die kompakte Baueinheit (16) zumindest eine separat ausgebildete Luftsteuerbox (31) sowie eine ebenfalls separat ausgebildete Ventilatorbox (32) umfaßt, die u. a. den Wärmetauscher (9) enthält.

2. Anlage nach Anspruch 1, dadurch gekennzeichnet, daß die Luftsteuerbox (31) zumindest eine an das abströmseitige Ende (5a) des zwischen der Verglasung (3, 4) gebildeten Luftkanals (5) anschließbare Abluft-Eintrittsöffnung (8a), eine an die Frischluft-Ansaugöffnung (7a') anschließbare Frischluft-Eintrittsöffnung (7a), eine an den wetterseitigen Abluftaustritt (8b') anschließbare Abluft-Austrittsöffnung (8b) sowie zumindest zwei an die Ventilatorbox (32) anschließbare Luftdurchlaßöffnungen (33, 34, 35, 36) für Frischluft und Abluft aufweist, während die neben den Wärmetauscher (9) zumindest einen Ventilator (14, 15) umfassende Ventilatorbox (32) zumindest zwei an die Luftsteuerbox (31) anschließbare Luftdurchlaßöffnungen für Frisch- und Abluft sowie die raumseitige Frischluft-Austrittsöffnung (7b) aufweist.

3. Anlage nach Anspruch 2, dadurch gekennzeichnet, daß die kompakte Baueinheit (16) zusätzlich noch ein Luftsammelrohr (37) umfaßt, das das abströmseitige Ende (5a) des Luftkanals (5) mit der bzw. den Abluft-Eintrittsöffnungen (8a) der Luftsteuerbox (31) verbindet.

4. Anlage nach Anspruch 2 oder 3, dadurch gekennzeichnet, daß Luftsteuerbox (31) und Ventilatorbox (32) über ein Verbindungsrohr (38) zur Kopplung der genannten Luftdurchlaßöffnungen (33, 34, 35, 36) miteinander verbunden sind.

5. Anlage nach einem der vorhergehenden Ansprüche, dadurch gekennzeichnet, daß an den Abluftkanal (8) in Strömungsrichtung gesehen vor dem Wärmetauscher (9) ein über ein erstes steuerbares Verschließorgan (11) ganz oder teilweise absperrbarer Bypass (10) angeschlossen ist, der unmittelbar zu der Abluft-Austrittsöffnung (8b) führt, und dessen Durchströmwiderstand bei vollständig geöffnetem Verschließorgan (11) kleiner ist als der des Abluftkanals (8).

6. Anlage nach einem der vorhergehenden Ansprüche, dadurch gekennzeichnet, daß an den Abluftkanal (8) in Strömungsrichtung gesehen vor dem Wärmetauscher (9) ein Mischkanal (20) angeschlossen ist, der in den Frischluftkanal (7) mündet und durch ein zweites steuerbares Verschließorgan (21) ganz oder teilweise absperrbar ist, während der Abluftkanal (8) durch ein vor dem Wärmetauscher (9) angeordnetes drittes Verschließorgan (22) ganz oder teilweise absperrbar ist (Figur 4).

7. Anlage nach Anspruch 5 und 6, dadurch gekennzeichnet, daß zwischen Luftsteuerbox (31) und Ventilatorbox (32) vier Luftdurchlaßöffnungen vorgesehen sind, nämlich eine (33) für den Frischluftkanal (7), eine zweite (34) für den Zulauf des Abluftkanals (8) und den Mischkanal (20), eine dritte (35) für den Bypass (10) und eine vierte (36) für den Rücklauf des Abluftkanals (8) (Figur 4).

8. Anlage nach einem der vorhergehenden Ansprüche, dadurch gekennzeichnet, daß an den Abluftkanal (8) in Strömungsrichtung gesehen hinter dem Wärmetauscher (9) ein Umluftkanal (12) angeschlossen ist, der über eine Umluft-Austrittsöffnung (12b) raumseitig mündet, wobei in dem genannten Anschlußbereich ein zweites Verschließorgan (13) vorgesehen ist, durch das der Abluftkanal (8) oder der Umluftkanal (12) ganz oder teilweise absperrbar sind (Figur 2).

9. Anlage nach einem der Ansprüche 1 bis 4 oder 8, dadurch gekennzeichnet, daß an den Frischluftkanal (7) in Strömungsrichtung gesehen vor dem Wärmetauscher (9) ein über ein erstes Verschließorgan (17) ganz oder teilweise absperrbarer Bypass (18) angeschlossen ist, der unmittelbar zu einer zweiten raumseitigen Frischluft-Austrittsöffnung (7c) führt und dessen Durchströmwiderstand bei vollständig geöffnetem Verschließorgan (17) kleiner ist als der des Abluftkanals (8) (Figur 3).

10. Anlage nach einem der vorhergehenden Ansprüche, dadurch gekennzeichnet, daß die Verschließorgane (11, 13, 17, 21, 22) durch Drehschieber (39) gebildet sind.

11. Anlage nach Anspruch 10, dadurch gekennzeichnet, daß die aus Rohrabschnitten (39a, 39b, 39c) betehenden Drehschieber (39) gleichachsig angeordnet und stirnseitig jeweils durch Trennwandungen gegeneinander abgeschottet sind.

12. Anlage nach Anspruch 10 oder 11, dadurch gekennzeichnet, daß die Drehschieber (39) einzeln oder in unterschiedlichen Kombinationen gemeinsam verstellbar sind.

## Claims

1. Ventilating system for forced-flow-ventilated rooms (1), which on their weather-side, have an outside glazing and on the side facing the room, an inside glazing (3, 4) with an air passage (5) formed between then for exhausted room air (6) and which further have a fresh-air passage (7) with a fresh-air suction opening (7a') on the weather-side and a fresh-air outlet opening (7b) on the side facing the room, the air passage (5) being in communication, on the down-stream-side, with a weatherside waste air outlet (8b') and a heat exchanger (9) preceding this outlet, via which the waste air can transfer heat to the fresh air passing through the fresh-air passage (7), characterized by an air regulating facility forming a compact structural unit (16) which is only located on the side facing the room (1) to be ventilated and is directly connected to the window structure (3, 4) forming the air passage (5), with the compact structural unit (16) incorporating at least one separately constructed air control box (31) and further a separately constructed fan box (32) which, among others, comprises the heat exchanger (9).

2. System according to claim 1, characterized in that the air control box (31) has at least one waste-air inlet opening (8a) connectable to the downstream end (5a) of the air passage (5) formed between the glazing (3, 4), one fresh-air inlet opening (7a) connectable to the fresh-air suction opening (7a'), one waste-air outlet opening (8b) connectable to the weatherside waste-air outlet (8b') and at least two air-throughflow openings (33, 34, 35, 36) for fresh air and waste air connectable to the fan box (32), whilst the fan box (32) containing at least one fan (14, 15) apart from the heat exchanger (9), has at least two air-throughflow openings for fresh air and waste air connectable to the air control box (31) and the fresh-air outlet opening (7b) adjoining the room.

3. System according to claim 2, characterized in that the compact structural unit (16) additionally comprises an air collection pipe (37) which connects the downstream end (5a) of the air passage (5) with the waste-air inlet opening(s) (8a) of the air control box (31).

4. System according to claim 2 or 3, characterized in that the air control box (31) and the fan box (32) are linked by a link pipe (38) for connecting the said air-throughflow openings (33, 34, 35, 36).

5. System according to one of the preceding claims, characterized in that a by-pass (10) closable wholly or partially by a first controllable closing device (11) is connected to the waste-air passage (8) upstream the heat exchanger (9), which by-pass leads directly to the waste-air outlet opening (8b) and whose flow resistance, with the closing device (11) fully opened, is smaller than that of the waste-air passage (8).

6. System according to one of the preceding claims, characterized in that a mixing passage (20) is connected to the waste-air passage (8) upstream the heat exchanger (9), which mixing passage leads into the fresh-air passage (7) and may be closed wholly or partially by a second controllable closing device (21), whilst the waste-air passage (8) is closable wholly or partially by a third closing device (22) arranged upstream the heat exchanger (9) (Figure 4).

7. System according to claim 5 and 6, characterized in that four air-throughflow openings are provided between air control box (31) and fan box (32), the first (33) for the fresh-air passage (7), the second (34) as inlet for the waste-air passage (8) and the mixing passage (20), the third (35) for the by-pass (10) and the fourth (36) as return for the waste-air passage (8) (Figure 4).

8. System according to one of the preceding claims, characterized in that a circulated-air passage (12) is connected to the waste-air passage (8) downstream the heat exchanger (9), which circulated-air passage leads into the room via a circulated-air outlet opening (12b), with a second closing device (13) provided in the said connection area, to facilitate complete or partial closing of the waste-air passage (8) or the circulated-air passage (12).

9. System according to one of claims 1 to 4 or 8, characterized in that a by-pass (18) wholly or partially closable by a first closing device (17) is connected to the fresh-air passage (7) upstream the heat exchanger (9), which by-pass leads directly to a second fresh-air outlet opening (7c) adjoining the room and whose flow resistance, with the closing device (17) fully opened, is smaller than that of the waste-air passage (8) (Figure 3).

10. System according to one of the preceding claims, characterized in that the closing devices (11, 13, 17, 21, 22) are formed by rotary slides (39).

11. System according to claim 10, characterized in that the rotary slides (39) consisting of pipe sections (39a, 39b, 39c) are arranged in the same axis and are separated from each other at their ends by partitions.

12. System according to claim 10 or 11, characterized in that the rotary slides (39) are adjustable individually or jointly in various combinations.

## Revendications

1. Dispositif d'aération pour locaux (1) aérés par circulation forcée, qui présentent un vitrage extérieur du côté exposé au climat du dehors (2) et un vitrage intérieur (3, 4) du côté du local, formant entre eux une gaine (5) pour l'air (6) aspiré du local, et qui comporte, de plus, une gaine d'air frais (7) avec un orifice d'aspiration (7a') sur le dehors et un orifice de sortie (7b) sur le local, la première gaine (5) étant reliée en aval à un orifice d'évacuation d'air (8b') sur le dehors et à un échangeur thermique (9) qui est monté avant l'orifice d'évacuation précité et permet à l'air sortant de céder de la chaleur à l'air frais parcourant la gaine d'air frais (7), caractérisé par un dispositif de régulation en air, qui constitue un module compact (16), qui se trouve exclusivement installé à l'intérieur du local (1) à aérer et se trouve directement associé à la structure de fenêtre (3, 4) formant la gaine d'air (5), le module compact (16) englobant au moins un caisson séparé de distribution d'air (31) ainsi qu'un caisson de ventilation (32) également séparé, qui contient notamment l'échangeur de chaleur (9).

2. Dispositif selon la revendication 1, caractérisé en ce que le caisson de distribution d'air (31) présente au moins un orifice pour l'entrée de l'air à évacuer (8a) destiné à être raccordé à l'extrémité aval (5a) de la gaine d'air (5) formée entre les vitrages (3, 4), un orifice d'entrée pour l'air frais (7a) destiné à être raccordé à l'orifice d'aspiration d'air frais (7a'), un orifice de sortie pour l'air à évacuer (8b) destiné à être raccordé à l'orifice (8b') d'évacuation d'air sur le dehors, ainsi que deux ouvertures au moins de passage d'air (33, 34, 35, 36) pour l'air frais et l'air sortant, destinées à être raccordées au caisson de ventilation (32), tandis que ce dernier (32), qui renferme, en plus de l'échangeur thermique (9), au moins un ventilateur (14, 15), présente l'orifice (7b) pour la sortie de l'air frais sur le local, ainsi qu'au moins deux ouvertures pour air frais et air à évacuer destinées à être raccordées au caisson de distribution d'air (31).

3. Dispositif selon la revendication 2, caractérisé en ce que le module compact (16) comprend encore en plus un tube collecteur d'air (37) qui réunit l'extrémité aval (5a) de la gaine d'air (5) avec le ou les orifices d'entrée d'air à évacuer (8a) du caisson de distribution d'air (31).

4. Dispositif selon la revendication 2 ou 3, caractérisé en ce que le caisson de distribution d'air (31) et le caisson de ventilation (32) sont reliés entre eux par l'intermédiaire d'un tube de raccordement (38) pour le couplage des ouvertures de passage d'air (33, 34, 35, 36) précitées.

5. Dispositif selon l'une des revendications précédentes, caractérisé en ce qu'à la gaine pour l'air à évacuer (8) est raccordé en amont de l'échangeur thermique (9) un bypass (10) pouvant être totalement ou partiellement obturé au moyen d'un premier organe manœuvrable de fermeture (11), et en ce que le bypass (10) conduit directement à l'orifice de sortie (8b) pour l'air à évacuer et offre, lorsque l'organe de fermeture (11) est complètement ouvert, une résistance à l'écoulement inférieure à celle de la gaine (8) pour l'air à évacuer.

6. Dispositif selon l'une des revendications précédentes, caractérisé en ce que, à la gaine (8) pour l'air à évacuer, est raccordée en amont de l'échangeur thermique (9) une gaine mélangeuse (20) qui débouche dans la gaine d'air frais (7) et peut être totalement ou partiellement obturée par un deuxième organe manœuvrable de fermeture (21), tandis que la gaine (8) pour l'air à évacuer peut être obturée totalement ou partiellement par un troisième organe de fermeture (22) disposé en amont du mélangeur thermique (9) (figure 4).

7. Dispositif selon les revendications 5 et 6, caractérisé en ce que, entre le caisson de distribution d'air (31) et le caisson de ventilation (32) sont prévues quatre ouvertures de passage d'air, à savoir une première ouverture (33) pour la gaine d'air frais (7), une deuxième (34) pour l'entrée de la gaine d'air à évacuer (8) et pour la gaine mélangeuse (20), une troisième (35) pour le bypass (10), et une quatrième (36) pour le retour de la gaine (8) pour l'air à évacuer (figure 4).

8. Dispositif selon l'une des revendications précédentes, caractérisé en ce qu'à la gaine (8) d'air à évacuer est raccordée en aval de l'échangeur thermique (9) une gaine de circulation d'air (12) qui débouche sur le local par un orifice de sortie (12b) pour l'air de circulation et en ce qu'un deuxième organe de fermeture (13), par lequel on peut obturer totalement ou partiellement la gaine (8) d'air à évacuer ou la gaine de circulation d'air (12), est prévu dans la zone de raccordement (figure 2).

9. Dispositif selon l'une des revendications 1 à 4 ou 8, caractérisé en ce que, à la gaine d'air frais (7), est raccordé en amont de l'échangeur thermique (9) un bypass (18) pouvant être totalement ou partiellement obturé au moyen d'un premier organe de fermeture (17) et en ce que ce bypass conduit directement à un second orifice (7c) pour la sortie de l'air frais sur le local, et offre, lorsque l'organe de fermeture (17) est totalement ouvert, une résistance à l'écoulement inférieure à celle de la gaine (8) pour l'air à évacuer (figure 3).

10. Dispositif selon l'une des revendications précédentes, caractérisé en ce que les organes de fermeture (11, 13, 17, 21, 22) sont constitués par des tiroirs rotatifs (39).

11. Dispositif selon la revendication 10, caractérisé en ce que les tiroirs rotatifs (39) composés de tronçons de tubes (39a, 39b, 39c) sont coaxiaux et sont isolés chacun l'un de l'autre du côté frontal par des cloisons de séparation.

12. Dispositif selon la revendication 10 ou 11, caractérisé en ce que les tiroirs rotatifs (39) peuvent être réglés soit individuellement, soit en commun en différentes combinaisons.

Fig. 1

Fig. 2 (A-A)

# Fig. 3 (A-A)

# Fig. 4

Fig.5a

Fig.5b

Fig.5c

Fig.5d

Fig.5e

4

Fig. 6a

Fig. 6b

Fig. 6c

Fig. 6d